(19) Europäisches Patentamt
European Patent Office
Office européen des brevets

(11) **EP 3 071 927 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(51) Int Cl.:
*G01B 11/06* (2006.01)   *B29L 23/00* (2006.01)
*B29C 47/00* (2006.01)   *B29C 47/92* (2006.01)

(21) Anmeldenummer: **14815566.6**

(22) Anmeldetag: **17.11.2014**

(86) Internationale Anmeldenummer:
**PCT/DE2014/100405**

(87) Internationale Veröffentlichungsnummer:
**WO 2015/074642 (28.05.2015 Gazette 2015/21)**

(54) **MESSVORRICHTUNG UND VERFAHREN ZUR VERMESSUNG VON PRÜFOBJEKTEN**

MEASURING DEVICE AND METHOD FOR MEASURING TEST OBJECTS

DISPOSITIF DE MESURE ET PROCÉDÉ DE MESURAGE D'OBJETS À CONTRÔLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2013 DE 102013223945**

(43) Veröffentlichungstag der Anmeldung:
**28.09.2016 Patentblatt 2016/39**

(73) Patentinhaber: **iNOEX GmbH Innovationen und Ausrüstungen für die Extrusionstechnik 49324 Melle (DE)**

(72) Erfinder: **STICH, Dominik Los Alamos, New Mexico 87544 (US)**

(74) Vertreter: **Bremer, Ulrich Advopat Patent- und Rechtsanwälte Brümmerstedt, Oelfke, Seewald & König Theaterstr. 6 30159 Hannover (DE)**

(56) Entgegenhaltungen:
DE-A1- 19 914 696    US-A1- 2006 285 112
US-A1- 2009 225 313    US-B1- 6 201 601

EP 3 071 927 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Terahertz-Messvorrichtung und ein Verfahren zur Vermessung von Prüfobjekten. Die zu vermessenden Prüfobjekte weisen insbesondere zumindest abschnittsweise mindestens eine hohlzylinderförmige Materialschicht auf.

Aus der DE 10 2008 046 988 A1 ist ein Reflektometer zur Charakterisierung von Materialien hinsichtlich wenigstens einer optischen Reflexionseigenschaft bekannt. Das Reflektometer umfasst einen Ellipsoidspiegel, in dessen ersten Brennpunkt eine zu charakterisierende Probe mittels eines Probenhalters gehalten wird. Die Probe ist mittels des Probenhalters um eine Drehachse drehbar. Die Bestrahlung der Probe erfolgt durch eine Öffnung im Ellipsoidspiegel mittels einer Strahlungsquelle. Der Ellipsoidspiegel bildet die von der im ersten Brennpunkt beleuchteten Probe reflektierten Strahlung durch eine im zweiten Brennpunkt positionierte Blende auf einen dahinter liegenden Detektor ab. Die Messdaten des Reflektometers werden anschließend zur Charakterisierung der Probe ausgewertet.

Die DE 199 146 96 A1 beschreibt ein Gerät zur Schnellmessung winkelabhängiger Beugungseffekte an feinstrukturierten Oberflächen, bei dem von einer kohärenten Strahlungsquelle, insbesondere einem Laser, Licht zur Ermittlung kleinster Strukturbreiten im Submikronbereich, insbesondere im Bereich von 0,25 $\mu$m, eingestrahlt wird, um durch Beugungseffekte die Oberfläche zu ermitteln.

Die US 2006/0285112 A1 beschreibt ein Verfahren und ein System zum Bestimmen einer Drift in der Position eines Lichtstrahls bezüglich eines drehenden Gegenstandes, wobei ein Halbleiter-Waver vermessen wird.

Die US 6,201,601 B1 beschreibt den Einsatz einer gekrümmten Oberfläche, um das Höhenprofil eines Halbleiter-Wavers durch Reflexion bei schräger Beleuchtung zu messen. Hierbei wird eine Wellenlänge von z. B. 488 nm eingestrahlt.

US 2009/0225313 A1 beschreibt ein Terahertz-Spektrometer, bei dem Terahertz für spektrometrische Untersuchungen eingestrahlt wird, insbesondere auch unter Verwendung eines elektrischen Spiegels, um den von einem Objekt reflektierten Terahertz-Strahl auf einen Detektor zu fokussieren.

Der Erfindung liegt die Aufgabe zugrunde, eine Terahertz-Messvorrichtung für Reflektionsmessung an Prüfobjekten, insbesondere aus Kunststoff, zu schaffen, die in einfacher und flexibler Weise die Vermessung von Prüfobjekten ermöglicht. Die Terahertz-Messvorrichtung soll insbesondere die Vermessung von Prüfobjekten ermöglichen, die zumindest abschnittsweise mindestens eine hohlzylinderförmige Materialschicht aufweisen.

Diese Aufgabe wird durch eine Terahertz-Messvorrichtung mit den Merkmalen des Anspruchs 1 gelöst. Die Terahertz-Messvorrichtung bzw. Reflexions-Messvorrichtung dient zur Durchführung von Reflexionsmessungen an dem zu vermessenden Prüfobjekt. Die Vermessung des Prüfobjekts erfolgt also mittels Reflexionsmessungen. Der erste Spiegel der mindestens einen Spiegel-Anordnung ist zumindest abschnittsweise elliptisch gekrümmt und bildet in einer x-y-Ebene einen ersten Brennpunkt und einen zugehörigen zweiten Brennpunkt aus. Im Bereich des ersten Brennpunkts ist ein zweiter Spiegel angeordnet, der durch den ersten Brennpunkt verläuft und relativ zu der x-y-Ebene geneigt angeordnet ist, also mit dieser einen Winkel ungleich 0° einschließt. Das zu vermessende Prüfobjekt ist mittels des Prüfobjekthalters im Bereich des zweiten Brennpunkts angeordnet. Die mindestens eine Sender-Empfänger-Einheit ist außerhalb der x-y-Ebene, also in einer z-Richtung beabstandet von der x-y-Ebene, angeordnet. Dies ist aufgrund der Umlenkung mittels des zweiten Spiegels möglich. Der zweite Spiegel schließt mit der x-y-Ebene einen Winkel $\alpha$ ein, wobei für $\alpha$ gilt: $30° \leq \alpha \leq 60°$, insbesondere $35° \leq \alpha \leq 55°$, und insbesondere $40° \leq \alpha \leq 50°$. Vorzugsweise beträgt der Winkel $\alpha = 45°$.

Zum Vermessen des Prüfobjekts wird von dem Sender der Sender-Empfänger-Einheit zunächst Strahlung in Richtung des zweiten Spiegels emittiert. Die emittierte Strahlung wird mittels des zweiten Spiegels in die x-y-Ebene umgelenkt und trifft anschließend auf den ersten Spiegel. Durch die elliptische Krümmung des ersten Spiegels wird die Strahlung in Richtung des zweiten Brennpunkts reflektiert. Aufgrund der Anordnung des Prüfobjekts im Bereich des zweiten Brennpunkts trifft die Strahlung auf das Prüfobjekt und wird von dort wiederum reflektiert. Das Prüfobjekt ist vorzugsweise derart angeordnet, dass eine Mittellängsachse des Prüfobjekts durch den zweiten Brennpunkt verläuft, so dass die Strahlung bzw. der Strahl radial auf das Prüfobjekt trifft und der Einfallswinkel der Strahlung dem Reflexionswinkel entspricht. Die am Prüfobjekt reflektierte Strahlung weist denselben Strahlengang, jedoch in entgegengesetzter Richtung, auf, wie die einfallende Strahlung. Die reflektierte Strahlung wird von dem ersten Spiegel aufgrund dessen elliptischer Krümmung in Richtung des ersten Brennpunkts reflektiert und trifft dort auf den zweiten Spiegel. Der zweite Spiegel lenkt die reflektierte Strahlung quer, insbesondere senkrecht, zu der x-y-Ebene in Richtung der Sender-Empfänger-Einheit um. Der Empfänger detektiert die reflektierte Strahlung und leitet die Messwerte an die Steuereinheit weiter, die die detektierte Strahlung bzw. die Messwerte auswertet.

Die erfindungsgemäße Terahertz-Messvorrichtung ist vergleichsweise einfach aufgebaut, da die mindestens eine Sender-Empfänger-Einheit aufgrund der zugehörigen Spiegel-Anordnung außerhalb, also in der z-Richtung beabstandet zu der x-y-Ebene positionierbar ist. Aufgrund der Anordnung des Prüfobjekts im Bereich des zweiten Brennpunkts mittels des Prüfobjekthalters und des zweiten Spiegels im Bereich des ersten Brennpunkts kann das Prüfobjekt in flexibler Weise vermessen werden. Beispielsweise kann durch ein Verschwenken bzw. Drehen des zweiten Spiegels um den ersten Brennpunkt und/oder durch ein Verschwenken bzw. Drehen des Prüfobjekts um den zweiten Brennpunkt ein weiter Umfangsbereich des Prüfobjekts mit nur einer Sender-Empfänger-Einheit vermessen werden. Beispielsweise ist die Vermessung einer Dicke mindestens einer hohlzylinderförmigen Materialschicht über den gesamten Umfang möglich. Das Prüfobjekt ist insbesondere hohlzylinderförmig ausgebildet, also als Rohr mit einem kreisförmigen Querschnitt. Das Prüfobjekt ist insbesondere aus Kunststoff ausgebildet. Das Prüfobjekt weist insbesondere eine hohlzylinderförmige Materialschicht oder mehrere hohlzylinderförmige Materialschichten auf.

Die mindestens eine Sender-Empfänger-Einheit ist derart ausgebildet, dass elektromagnetische Strahlung mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Hierdurch wird insbesondere die Vermessung von Prüfobjekten aus Kunststoff ermöglicht. Die Vermessung des Prüfobjekts mittels der Strahlung bzw. THz-Strahlung basiert auf der Messung einer Laufzeitdifferenz der Strahlung, die an den Grenzschichten reflektiert wird. Grenzschichten sind die Oberflächen des Prüfobjekts, beispielsweise die Rohraußenwand und die Rohrinnenwand, und aneinandergrenzende Materialschichten innerhalb des Prüfobjekts. Die mindestens eine Sender-Empfänger-Einheit ist insbesondere derart ausgebildet, dass THz-Pulse emittierbar bzw. detektierbar sind.

Eine Terahertz-Messvorrichtung nach Anspruch 2 gewährleistet in einfacher Weise eine Vermessung des Prüfobjekts. Dadurch, dass die mindestens eine Sender-Empfänger-Einheit entlang der z-Achse, also senkrecht beabstandet von der x-y-Ebene angeordnet ist, wird der von dem ersten Spiegel begrenzte Raum bzw. Innenraum nicht unnötigerweise von der Sender-Empfänger-Einheit beeinträchtigt, wobei in einfacher Weise eine Umlenkung der Strahlung erfolgt. Der zweite Spiegel benötigt einen vergleichsweise geringen Platzbedarf, sodass die Spiegel-Anordnung vergleichsweise kompakt aufgebaut ist. Die Größe der Spiegel-Anordnung wird lediglich durch die Größe des größten zu vermessenden Prüfobjekts bestimmt. Die z-Achse verläuft senkrecht zu der x-y-Ebene. Entsprechend ist der zweite Spiegel zur Umlenkung der Strahlung um 45° zu der x-y-Ebene geneigt.

Eine Terahertz-Messvorrichtung nach Anspruch 3 gewährleistet eine voll umfängliche Vermessung des Prüfobjekts. An einer dem zweiten Spiegel abgewandten Seite des Prüfobjekts ist ein Bereich des Prüfobjekts aufgrund der Raumausdehnung des Prüfobjekts selbst abgeschattet, sodass dieser Bereich mittels der ersten Spiegel-Anordnung nicht vermessbar ist. Der abgeschattete Bereich wird mittels der zweiten Spiegel-Anordnung vermessen, die in der z-Richtung versetzt zu der ersten Spiegel-Anordnung angeordnet ist. Bei einer geeigneten Anordnung von genau zwei Spiegel-Anordnungen kann das Prüfobjekt voll umfänglich vermessen werden, jedoch können auch mehr als zwei Spiegel-Anordnungen vorgesehen sein, wenn dies vorteilhaft ist. Die Spiegel-Anordnungen sind derart zueinander ausgerichtet, dass der abgeschattete Bereich, der von der ersten Spiegel-Anordnung nicht vermessbar ist, mittels der zweiten Spiegel-Anordnung vermessbar ist und umgekehrt. Vorzugsweise sind die mindestens zwei Spiegel-Anordnungen identisch aufgebaut. Das Vorsehen mehrerer Spiegel-Anordnungen ist insbesondere dann vorteilhaft, wenn das Prüfobjekt nicht um den jeweiligen zweiten Brennpunkt schwenkbar bzw. drehbar ist, beispielsweise wenn die Vermessung des Prüfobjekts inline im Herstellungsprozess erfolgt.

Eine Terahertz-Messvorrichtung nach Anspruch 4 gewährleistet eine vollumfängliche Vermessung des Prüfobjekts. Eine Mittellängsachse des Prüfobjekts ist deckungsgleich mit der Geraden durch die zweiten Brennpunkte, sodass die Strahlung bei den mindestens zwei Spiegel-Anordnungen jeweils radial auf das Prüfobjekt bzw. eine Oberfläche des Prüfobjekts trifft.

Eine Terahertz-Messvorrichtung nach Anspruch 5 gewährleistet eine voll umfängliche Vermessung des Prüfobjekts mittels der genau zwei Spiegel-Anordnungen. Durch die Ausrichtung der genau zwei Spiegel-Anordnungen wird gewährleistet, dass mittels der einen Spiegel-Anordnung der abgeschattete Bereich des Prüfobjekts vermessbar ist, der von der jeweils anderen Spiegel-Anordnung nicht vermessbar ist. Die y-z-Ebene verläuft senkrecht zu der x-y-Ebene durch die jeweiligen zweiten Brennpunkte. Vorzugsweise liegen die ersten Brennpunkte in einer x-z-Ebene, die durch die zweiten Brennpunkte verläuft.

Eine Terahertz-Messvorrichtung nach Anspruch 6 gewährleistet eine einfache und schnelle Vermessung des Prüfobjekts. Dadurch, dass jeder Spiegel-Anordnung eine eigene Sender-Empfänger-Einheit zugeordnet ist, kann mittels der mindestens zwei Spiegel-Anordnungen das Prüfobjekt gleichzeitig vermessen werden. Insbesondere weist die Messvorrichtung genau zwei Spiegel-Anordnungen und genau zwei zugehörige Sender-Empfänger-Einheiten auf.

Eine Terahertz-Messvorrichtung nach Anspruch 7 gewährleistet eine annähernd vollumfängliche Vermessung des Prüfobjekts. Dies gilt insbesondere, wenn das Prüfobjekt selbst nicht um den zweiten Brennpunkt schwenkbar bzw. drehbar ist, beispielsweise wenn die Vermessung inline im Herstellungsprozess erfolgt. Durch das Verschwenken des zweiten Spiegels um die z-Achse trifft die emittierte Strahlung in unterschiedlichen Winkeln auf den ersten Spiegel, sodass der erste Spiegel - ausgehend von unterschiedlichen Reflexionsstellen - die Strahlung in Richtung des zweiten Brennpunkts reflektiert. Die Strahlung trifft somit an unterschiedlichen Stellen auf die Oberfläche des Prüfobjekts, wodurch das Prüfobjekt in einem weiten Umfangsbereich vermessen wird. Mit Ausnahme des von dem Prüfobjekt selbst abgeschatteten Bereichs ist somit eine annähernd vollumfängliche Vermessung des Prüfobjekts möglich. Für eine vollumfängliche Vermessung des Prüfobjekts ist insbesondere eine zweite Spiegel-Anordnung vorgesehen, wobei der jeweilige zweite Spiegel um eine zugehörige z-Achse durch den jeweiligen ersten Brennpunkt verschwenkbar ist.

Eine Terahertz-Messvorrichtung nach Anspruch 8 gewährleistet auf einfache Weise eine vollumfängliche Vermessung des Prüfobjekts. Der zweite Spiegel kann relativ zu dem ersten Spiegel fest angeordnet sein, sodass die vollumfängliche Vermessung ausschließlich durch das Verschwenken bzw. Drehen des Prüfobjekts erfolgt. Weiterhin kann der zweite Spiegel um eine parallel zu der z-Richtung durch den ersten Brennpunkt verlaufende z-Achse verschwenkbar sein, sodass der Prüfobjekthalter lediglich derart verschwenkbar sein muss, dass der durch das Verschwenken des zweiten Spiegels nicht erreichbare, abgeschattete Bereich des Prüfobjekts durch Verschwenken des Prüfobjekts vermessbar wird.

Eine Terahertz-Messvorrichtung nach Anspruch 9 gewährleistet in einfacher Weise eine exakte Vermessung des Prüfobjekts. Die emittierte Strahlung weist in der x-y-Ebene eine Strahldivergenz auf. Die Größe des Messbereichs hängt von der Ellipsengeometrie des ersten Spiegels ab, wobei sich die Größe des Messbereichs abhängig von einem Drehwinkel des zweiten Spiegels umso weniger ändert, je kleiner das Verhältnis der Längen der langen Halbachse zu der kurzen Halbachse ist.

Eine Terahertz-Messvorrichtung nach Anspruch 10 gewährleistet in einfacher Weise eine exakte Vermessung des Prüfobjekts. Die emittierte und von dem zweiten Spiegel umgelenkte Strahlung weist senkrecht zu der x-y-Ebene eine Strahldivergenz auf. Durch die gekrümmte Ausbildung des ersten Spiegels in der z-Richtung wird die an dem ersten Spiegel reflektierte Strahlung, je nach Krümmung des ersten Spiegels, fokussiert oder zumindest kollimiert. Hierdurch wird gewährleistet, dass die an dem Prüfobjekt reflektierte Strahlung den Strahlengang genau in entgegengesetzter Richtung wieder durchläuft und somit detektierbar ist.

Ist der erste Spiegel in der z-Richtung parabolisch gekrümmt und fällt der erste Brennpunkt, insbesondere bei allen Drehwinkeln des zweiten Spiegels, mit dem Brennpunkt der Parabel bzw. der parabelförmigen Krümmung zusammen, so wird die an dem ersten Spiegel reflektierte Strahlung in z-Richtung kollimiert. Alle Teilstrahlen des Strahls bzw. der Strahlung fallen unabhängig vom Radius des Prüfobjekts immer senkrecht auf das Prüfobjekt ein. Die Ausdehnung des Messbereichs in der z-Richtung ist der Durchmesser des kollimierten Strahls, der durch den Divergenzwinkel und den Abstand zwischen dem zweiten und dem ersten Spiegel entlang des zurückgelegten Strahlengangs gegeben ist.

Ist der erste Spiegel in der z-Richtung elliptisch gekrümmt, wobei der erste Brennpunkt des ersten Spiegels in der x-y-Ebene, insbesondere bei allen Drehwinkeln des zweiten Spiegels, mit dem ersten Brennpunkt der in der z-Richtung ausgeformten Ellipse bzw. elliptischen Krümmung zusammenfällt, so wird die reflektierte Strahlung in einen zweiten Brennpunkt fokussiert, der auf der Oberfläche des Prüfobjekts liegt. Die Ausdehnung des Messbereichs in der z-Richtung ist aufgrund der Fokussierung somit optimiert.

Ist der erste Spiegel in der z-Richtung sphärisch gekrümmt, sodass der erste Spiegel ein Rotationsellipsoid ist, das bei Rotation um eine y-Achse entsteht, so ist die Strahlung in der x-y-Ebene und entlang der z-Richtung in den zweiten Brennpunkt fokussiert. Hierdurch erfolgt eine Fokussierung des Strahls bzw. der Strahlung in der z-Richtung, wobei die Fokussierung umso stärker ist, je kleiner der Radius des Prüfobjekts ist. Eine sphärische Krümmung ist insbesondere dann vorteilhaft, wenn der Radius des Prüfobjekts bedeutend kleiner ist als die Halbachsen.

Weiterhin kann der erste Spiegel als Freiformfläche in der z-Richtung gekrümmt und dahingehend optimiert sein, dass für einen vordefinierten Bereich des Radius des Prüfobjekts ein Messbereich bzw. Messpunkt mit gewünschter Fokusgröße erzielt wird.

Eine Terahertz-Messvorrichtung nach Anspruch 11 gewährleistet auf einfache Weise eine exakte Vermessung des Prüfobjekts. Die Strahlung bzw. der Strahl wird auf das Prüfobjekt fokussiert, indem der erste Spiegel in der z-Richtung plan ausgebildet ist und ein Fokussier-Element eingesetzt wird, das die Strahlausbreitung senkrecht zu der x-y-Ebene beeinflusst und die Strahlung bzw. den Strahl in der z-Richtung fokussiert. Beispielsweise kann der zweite Spiegel gekrümmt ausgebildet sein, sodass dieser zusätzlich als Fokussier-Element wirkt und die Strahlung in der z-Richtung fokussiert. Weiterhin kann das Fokussier-Element als Linse ausgebildet sein, die im Strahlengang zwischen der Sender-Empfänger-Einheit und dem zugehörigen zweiten Spiegel angeordnet ist und die Strahlausbreitung in z-Richtung beeinflusst, also die Strahlung in der z-Richtung fokussiert. Das Fokussier-Element ist insbesondere zusammen mit dem zweiten Spiegel um die z-Achse drehbar.

Beispielsweise wird die einfallende kollimierte Strahlung mit einem als zylindrische Linse ausgebildetem Fokussier-Element auf den im ersten Brennpunkt angeordneten zweiten Spiegel fokussiert. Das Fokussier-Element und der zweite Spiegel rotieren vorzugsweise gemeinsam und sind derart zueinander angeordnet, dass die divergierende Ebene des Strahls bzw. der Strahlung nach dem zweiten Spiegel in der x-y-Ebene liegt. Ein zweites als zylindrische Linse ausgebildetes Fokussier-Element ist senkrecht zu der ersten Linse angeordnet und wird ebenfalls im Strahlengang vor dem zweiten Spiegel positioniert und ist entsprechend der ersten Linse zusammen mit dem zweiten Spiegel rotierbar. Durch die zweite Linse wird die Strahlung von dem zweiten Spiegel in der y-Richtung und nach dem zweiten Spiegel in der z-Richtung fokussiert.

Der Abstand der zweiten Linse bis zur Oberfläche des Prüfobjekts entspricht deren Brennweite. Durch eine Änderung der Linsenposition der zweiten Linse entlang der z-Achse ist der Messfokus in z-Richtung auf Prüfobjekte mit unterschiedlichem Radius anpassbar.

Der Erfindung liegt ferner die Aufgabe zugrunde, ein Verfahren zu schaffen, das in einfacher und flexibler Weise die Vermessung von Prüfobjekten ermöglicht. Das Verfahren soll insbesondere die Vermessung von Prüfobjekten ermöglichen, die zumindest abschnittsweise mindestens eine hohlzylinderförmige Materialschicht aufweisen.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen der erfindungsgemäßen Messvorrichtung. Das erfindungsgemäße Verfahren kann insbesondere auch mit den Merkmalen der Ansprüche 2 bis 11 weitergebildet werden. Entsprechend kann die Messvorrichtung gemäß den Ansprüchen 1 bis 11 durch die Merkmale der Ansprüche 12 bis 15 weitergebildet werden.

Ein Verfahren nach Anspruch 13 gewährleistet eine vollumfängliche Vermessung des Prüfobjekts. Das Prüfobjekt ist um eine durch den zweiten Brennpunkt verlaufende Drehachse verschwenkbar und/oder der zweite Spiegel ist um die durch den ersten Brennpunkt verlaufende z-Achse verschwenkbar. Hierdurch ist das Prüfobjekt in einem weiten Umfangsbereich vermessbar, wobei insbesondere auch ein abgeschatteter Bereich bei entsprechender Verschwenkbarkeit bzw. Drehbarkeit vermessbar ist. Für eine Vermessung des Prüfobjekts inline im Herstellungsprozess ist insbesondere der zweite Spiegel um die z-Achse verschwenkbar bzw. drehbar. Im Herstellungsprozess ist das Prüfobjekt selbst in der Regel nicht um seine Mittellängsachse verschwenkbar bzw. drehbar.

Ein Verfahren nach Anspruch 14 gewährleistet eine flexible Vermessung von hohlzylinderförmigen Prüfobjekten. Ist das Prüfobjekt beispielsweise hohlzylinderförmig als Rohr ausgebildet, so ist eine Vermessung der Wanddicke entlang des Umfangs und der Länge des Rohrs möglich. Weist das Rohr bzw. Prüfobjekt zusätzlich noch mehrere Materialschichten auf, so können auch die Schichtdicken der Materialschichten über den Umfang und die Länge vermessen werden. Entsprechendes gilt für Prüfobjekte, die im weitesten Sinne hohlzylinderförmig ausgebildet sind und eine Mittellängsachse aufweisen und/oder im weitesten Sinne hohlzylinderförmige Materialschichten mit kreisförmigem Querschnitt aufweisen. Vorzugsweise ist das Prüfobjekt als Rohr mit einem kreisförmigen Querschnitt ausgebildet, das aus einem einheitlichen Material oder aus mehreren hohlzylinderförmigen Materialschichten ausgebildet ist. Das Prüfobjekt ist insbesondere aus Kunststoff ausgebildet. Zur Messung von Prüfobjekten aus Kunststoff ist insbesondere THz-Strahlung geeignet. Prüfobjekte mit kreisförmigem Querschnitt sind derart angeordnet, dass eine Mittellängsachse der Prüfobjekte durch den zweiten Brennpunkt verläuft. Bei einer derartigen Anordnung der Prüfobjekte trifft die Strahlung radial auf die Oberfläche der Prüfobjekte, wodurch eine hohe Messgenauigkeit erzielt wird. Ist das Prüfobjekt beispielsweise als Vollzylinder ausgebildet, so ist eine Vermessung der Wanddicke einer hohlzylinderförmigen Materialschicht möglich.

Ein Verfahren nach Anspruch 15 gewährleistet eine einfache Vermessung von Prüfobjekten aus Kunststoff.

Weitere Merkmale, Vorteile und Einzelheiten der Erfindung ergeben sich aus der nachfolgenden Beschreibung mehrerer Ausführungsbeispiele. Es zeigen:

Fig. 1    eine Seitenansicht einer Terahertz-Messvorrichtung zur Vermessung eines Prüfobjekts gemäß einem ersten Ausführungsbeispiel,

Fig. 2    eine Draufsicht auf die Terahertz-Messvorrichtung in Fig. 1,

Fig. 3    eine Seitenansicht einer Terahertz-Messvorrichtung zur Vermessung eines Prüfobjekts gemäß einem zweiten Ausführungsbeispiel,

Fig. 4    eine Draufsicht auf die Terahertz-Messvorrichtung in Fig. 3,

Fig. 5    eine Seitenansicht einer Terahertz-Messvorrichtung zur Vermessung eines Prüfobjekts gemäß einem dritten Ausführungsbeispiel,

Fig. 6    eine erste Seitenansicht einer Terahertz-Messvorrichtung zur Vermessung eines Prüfobjekts gemäß einem vierten Ausführungsbeispiel,

Fig. 7    eine zweite und um 90° gedrehte Seitenansicht der Terahertz-Messvorrichtung in Fig. 6,

Fig. 8    eine Draufsicht auf eine Terahertz-Messvorrichtung zur Vermessung eines Prüfobjekts mit zwei Spiegel-Anordnungen und zwei zugehörigen Sender-Empfänger-Einheiten gemäß einem fünften Ausführungsbeispiel, und

Fig. 9    einen zeitlichen Verlauf einer als THz-Pulse emittierten Strahlung.

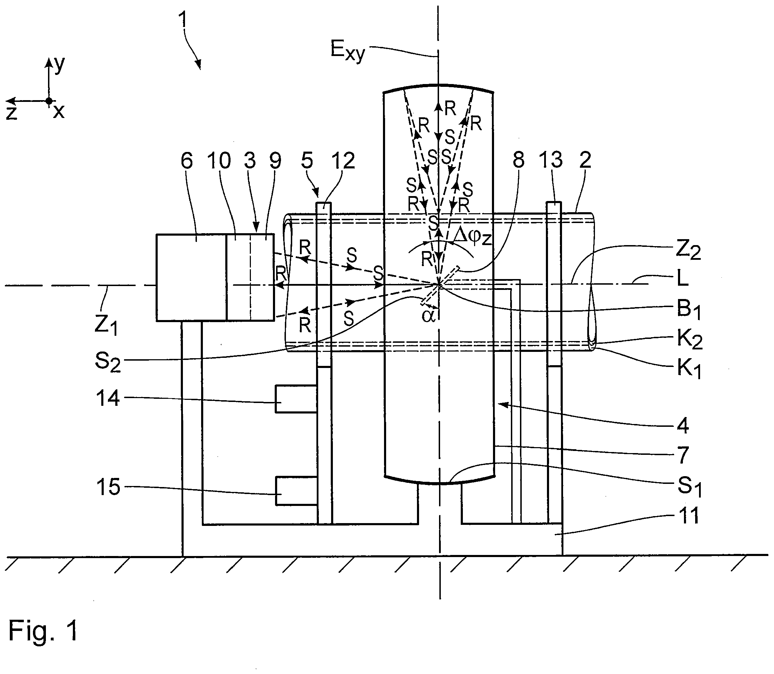

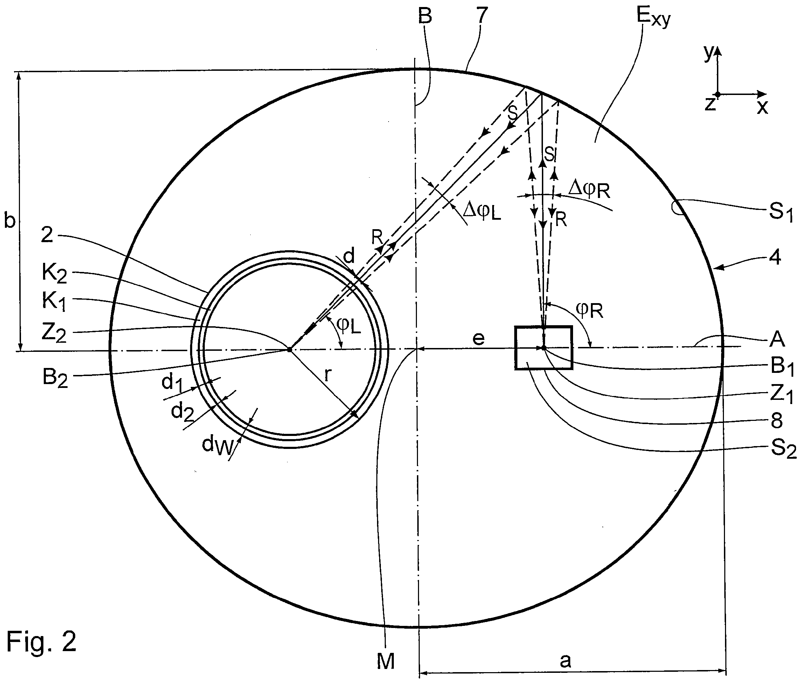

Nachfolgend ist anhand der Fig. 1 und 2 ein erstes Ausführungsbeispiel der Erfindung beschrieben. Eine Terahertz-Messvorrichtung 1 weist zur Vermessung eines Prüfobjekts 2 eine Sender-Empfänger-Einheit 3, eine zugehörige Spiegel-Anordnung 4, einen Prüfobjekthalter 5 und eine Steuereinheit 6 auf.

Die Spiegelanordnung 4 umfasst einen ersten Spiegel 7, der symmetrisch zu einer x-y-Ebene $E_{xy}$ ausgebildet und angeordnet ist. Die x-y-Ebene $E_{xy}$ ist durch eine x-Richtung und eine senkrecht dazu verlaufende y-Richtung definiert. Der erste Spiegel 7 ist in der x-y-Ebene $E_{xy}$ und parallel dazu elliptisch gekrümmt. Der erste Spiegel 7 bildet also in der x-y-Ebene $E_{xy}$ eine Spiegeloberfläche $S_1$ in Form einer Ellipse aus. Aufgrund der elliptischen Krümmung weist der erste Spiegel 7 in der x-y-Ebene $E_{xy}$ zwei Brennpunkte $B_1$ und $B_2$ auf. Die Brennpunkte $B_1$ und $B_2$ haben in der x-Richtung jeweils einen Abstand e von einem Mittelpunkt M der Ellipse.

Die Ellipse bzw. die Ellipsenform des ersten Spiegels 7 ist durch eine erste Halbachse A mit einer zugehörigen Länge a und einer im Vergleich zu der ersten Halbachse A kürzeren zweiten Halbachse B mit einer Länge b definiert. Für ein Verhältnis der Längen a/b gilt: a/b ≤ 1,3, insbesondere a/b ≤ 1,2, und insbesondere a/b ≤ 1,1.

Die Spiegel-Anordnung 4 umfasst ferner einen zweiten Spiegel 8, der im Bereich des ersten Brennpunkts $B_1$ angeordnet ist. Der zweite Spiegel 8 ist plan ausgebildet, weist also eine plane Spiegeloberfläche $S_2$ auf. Der zweite Spiegel 8 schließt mit der x-y-Ebene $E_{xy}$ einen Winkel $\alpha$ ein, wobei für $\alpha$ - abhängig von der Anordnung der Sender-Empfänger-Einheit 3 gilt: 30° ≤ $\alpha$ ≤ 60°, insbesondere 35° ≤ $\alpha$ ≤ 55°, und insbesondere 40° ≤ $\alpha$ ≤ 50°. Vorzugsweise beträgt der Winkel $\alpha$ = 45°. Der zweite Spiegel 8 ist vorzugsweise derart angeordnet, dass der erste Brennpunkt $B_1$ im Wesentlichen mittig auf der Spiegeloberfläche $S_2$ liegt.

Die Sender-Empfänger-Einheit 3 umfasst einen Sender 9 zum Emittieren von Strahlung S. Die emittierte Strahlung wird von dem Sender 9 bis zu dem Prüfobjekt 2 nachfolgend mit S bezeichnet. Die an dem Prüfobjekt 2 reflektierte Strahlung wird nachfolgend von dem Prüfobjekt 2 bis zu einem Empfänger 10 mit R bezeichnet. Der Empfänger 10 dient zum Detektieren der an dem Prüfobjekt 2 reflektierten Strahlung R. Zur Vermessung des Prüfobjekts 2 wird mittels der Steuereinheit 6 die detektierte Strahlung R ausgewertet.

Durch die elliptische Krümmung des ersten Spiegels 7 erfolgt eine Umlenkung der Strahlung S, R zwischen den Brennpunkten $B_1$ und $B_2$. Demgegenüber dient der zweite Spiegel 8 zur Umlenkung der Strahlung S, R zwischen einer quer bzw. senkrecht zu der x-y-Ebene $E_{xy}$ verlaufenden z-Richtung und der x-y-Ebene $E_{xy}$. Die z-Richtung verläuft senkrecht zu der x-Richtung und der y-Richtung, sodass die x-, y- und die z-Richtung ein kartesisches Koordinatensystem ausbilden.

Die Sender-Empfänger-Einheit 3 ist in der z-Richtung beabstandet zu der x-y-Ebene $E_{xy}$ angeordnet. Die Sender-Empfänger-Einheit 3 ist entlang einer ersten z-Achse $Z_1$ angeordnet, die parallel zu der z-Richtung durch den ersten Brennpunkt $B_1$ verläuft.

Die Sender-Empfänger-Einheit 3, die Spiegel-Anordnung 4, der Prüfobjekthalter 5 und die Steuereinheit 6 sind an einem Grundgestell 11 der Messvorrichtung 1 befestigt. Der Prüfobjekthalter 5 ist derart ausgebildet, dass das Prüfobjekt 2 um eine zweite z-Achse $Z_2$ drehbar ist. Die zweite z-Achse $Z_2$ verläuft parallel zu der z-Richtung durch den zweiten Brennpunkt $B_2$. Hierzu weist der Prüfobjekthalter 5 beispielsweise zwei Halteaufnahmen 12, 13 auf, die beidseitig der x-y-Ebene $E_{xy}$ und konzentrisch zu der zweiten z-Achse $Z_2$ angeordnet sind. Die Halteaufnahmen 12, 13 sind relativ zu dem Grundgestell 11 um die zweite z-Achse $Z_2$ drehbar. Hierzu weist der Prüfobjekthalter 5 eine erste elektrische Antriebseinheit 14 auf, die die Halteaufnahmen 12, 13 synchron drehantreibt. Mittels einer zweiten elektrischen Antriebseinheit 15 ist der Prüfobjekthalter 5 in z-Richtung linear verfahrbar.

Das Prüfobjekt 2 ist hohlzylinderförmig ausgebildet und weist einen kreisförmigen bzw. ringförmigen Querschnitt auf. Das Prüfobjekt 2 ist mittels des Prüfobjekthalters 5 derart angeordnet, dass eine Mittellängsachse L deckungsgleich mit der zweiten z-Achse $Z_2$ ist. Das Prüfobjekt 2 ist zweischichtig ausgebildet und weist zwei hohlzylinderförmige Materialschichten $K_1$ und $K_2$ auf. Das Prüfobjekt 2 ist aus Kunststoff, wobei insbesondere die zwei Materialschichten $K_1$ und $K_2$ aus unterschiedlichen Kunststoffmaterialien sind. Zur Vermessung des Prüfobjekts 2 ist die Sender-Empfänger-Einheit 3 derart ausgebildet, dass die elektromagnetische Strahlung S, R mit einer Frequenz im Bereich von 0,01 THz bis 50 THz, insbesondere von 0,05 THz bis 20 THz, und insbesondere von 0,1 THz bis 10 THz emittierbar bzw. detektierbar ist. Vorzugsweise wird die Strahlung S pulsförmig emittiert, also THz-Pulse erzeugt.

Zur Fokussierung der Strahlung S, R in der z-Richtung ist der erste Spiegel 7 in der z-Richtung konkav gekrümmt. Wie in Fig. 1 veranschaulicht ist, weist die Spiegeloberfläche $S_1$ des ersten Spiegels 7 in der z-Richtung eine elliptische Krümmung auf.

Die Funktionsweise der Terahertz-Messvorrichtung 1 ist wie folgt:

Der Sender 9 emittiert Strahlung S in Form von THz-Pulsen. Die Erzeugung von THz-Pulsen ist grundsätzlich bekannt. THz-Pulse werden beispielsweise optisch mittels Femtosekunden-Laserpulsen und photoleitenden Schaltern erzeugt. Die Strahlung S wird im Wesentlichen in der z-Richtung emittiert und auf den ersten Brennpunkt $B_1$ fokussiert.

Durch den zweiten Spiegel 8 wird die Strahlung S von der z-Richtung in die x-y-Ebene $E_{xy}$ umgelenkt und trifft auf die Spiegeloberfläche $S_1$ des ersten Spiegels 7. Aufgrund der elliptischen Krümmung wird die aus Richtung des ersten Brennpunkts $B_1$ kommende Strahlung S an der Spiegeloberfläche $S_1$ in Richtung des zweiten Brennpunkts $B_2$

reflektiert. Da sich im Strahlengang zwischen der Spiegeloberfläche $S_1$ und dem zweiten Brennpunkt $B_2$ das Prüfobjekt 2 befindet, trifft die Strahlung S radial auf das Prüfobjekt 2 und wird an den verschiedenen Grenzschichten des Prüfobjekts 2 reflektiert. Die einzelnen Grenzschichten sind die äußere Oberfläche und die innere Oberfläche des Prüfobjekts 2 sowie die dazwischenliegende Grenzschicht der Materialschichten $K_1$ und $K_2$. Die THz-Pulse werden von der Sender-Empfänger-Einheit 3 somit radial auf das Prüfobjekt 2 bzw. das Rohr 2 eingestrahlt.

Die reflektierte Strahlung R bzw. die reflektierten THz-Pulse laufen entlang desselben Strahlengangs zurück zu der Sender-Empfänger-Einheit 3 und werden dort von dem Empfänger 10 detektiert. Der Aufbau des Empfängers 10 ist grundsätzlich bekannt. THz-Pulse werden beispielsweise durch optisches Abtasten (Sampling) mit Femtosekunden-Laserpulsen detektiert.

Bei der Vermessung des Prüfobjekts 2 werden insbesondere eine Wanddicke $d_W$ des Prüfobjekts 2 sowie Schichtdicken $d_1$ und $d_2$ der Materialschichten $K_1$ und $K_2$ bestimmt. Die Messung der Wanddicke $d_W$ sowie der Schichtdicken $d_1$ und $d_2$ basieren auf der Messung von Laufzeitdifferenzen der an den einzelnen Grenzschichten reflektierten THz-Pulse. Mittels der Steuereinheit 6 werden die Laufzeitdifferenzen ausgewertet und die Dicken $d_W$, $d_1$ und $d_2$ ermittelt.

In den Figuren 1 und 2 ist mit durchgezogenen Linien ein idealer Strahl eingezeichnet. Die Strahlung S trifft als idealer Strahl punktförmig auf das Prüfobjekt 2, sodass das Prüfobjekt 2 in einem Messpunkt vermessen wird. Durch Drehung des Prüfobjekts 2 um die eine Drehachse darstellende zweite z-Achse $Z_2$ mittels des Prüfobjekthalters 5 ist das Prüfobjekt 2 entlang einer Umfangslinie vollständig vermessbar. Hierzu werden die Halteaufnahmen 12, 13 mittels der Antriebseinheit 14 um die zweite z-Achse $Z_2$ gedreht. Mittels der zweiten Antriebseinheit 15 ist der Prüfobjekthalter 5 zudem entlang der z-Richtung linear verfahrbar, sodass das Prüfobjekt 2 auch entlang seiner Länge vollständig vermessen wird.

In den Fig. 1 und 2 ist ferner eine reale Strahlausbreitung der Strahlung S, R mit gestrichelten Linien eingezeichnet. Die emittierte Strahlung S wird mittels der Sender-Empfänger-Einheit 3 zunächst in den ersten Brennpunkt $B_1$ fokussiert. Hierzu weist die Sender-Empfänger-Einheit 3 beispielsweise eine Linse auf. Die an dem zweiten Spiegel 8 reflektierte Strahlung S weist eine Strahldivergenz auf. Die Strahlung S, R weist einerseits einen Divergenzwinkel $\Delta\varphi_R$ in der x-y-Ebene $E_{xy}$ und einen Divergenzwinkel $\Delta\varphi_Z$ in der z-Richtung auf. Durch die elliptische Krümmung des ersten Spiegels 7 in der x-y-Ebene $E_{xy}$ wird die Strahlung S, R auf den jeweiligen Brennpunkt $B_1$ und $B_2$ fokussiert. Die Strahlung S trifft bei einer realen Strahlausbreitung nicht punktförmig auf das Prüfobjekt 2, sondern in einem Messbereich, wobei die einzelnen Strahlen bzw. Teilstrahlen jeweils radial auf das Prüfobjekt 2 treffen. Die Größe des Messbereichs hängt von dem Divergenzwinkel $\Delta\varphi_R$ und einem Radius r des Prüfobjekts 2 ab.

Der zweite Spiegel 8 ist derart angeordnet, dass die Strahlung S idealerweise mit einem Winkel $\varphi_R$ zu der x-Richtung zu dem ersten Spiegel 7 reflektiert wird, wobei die Strahlung S aufgrund der realen Strahlausbreitung einen Divergenzwinkel $\Delta\varphi_R$ aufweist. Aufgrund der festen Anordnung des zweiten Spiegels 8 gilt für den Winkel $\varphi_R$: $\varphi_R = 90°$. Die Strahlung S trifft bei idealer Strahlausbreitung mit einem Winkel $\varphi_L$ relativ zu der z-Richtung auf das Prüfobjekt 2, wobei die Strahlung S beim Auftreffen auf das Prüfobjekt 2 einen Divergenzwinkel $\Delta\varphi_L$ aufweist. Für den Divergenzwinkel bzw. Öffnungswinkel $\Delta\varphi_L$ gilt:

$$\Delta\varphi_L(\varphi_R, \Delta\varphi_R, a, b) =$$
$$\arccos\left(\frac{2a^2 - b^2 - \frac{ab^2}{a + \sqrt{a^2 - b^2}\cos(\varphi_R + \Delta\varphi_R/2)}}{\sqrt{a^2 - b^2}\left(2a - \frac{b^2}{a + \sqrt{a^2 - b^2}\cos(\varphi_R + \Delta\varphi_R/2)}\right)}\right) - \arccos\left(\frac{2a^2 - b^2 - \frac{ab^2}{a + \sqrt{a^2 - b^2}\cos(\varphi_R - \Delta\varphi_R/2)}}{\sqrt{a^2 - b^2}\left(2a - \frac{b^2}{a + \sqrt{a^2 - b^2}\cos(\varphi_R - \Delta\varphi_R/2)}\right)}\right) \quad (1)$$

Für eine Abmessung d des Messbereichs in der x-y-Ebene $E_{xy}$ gilt näherungsweise:

$$d(\Delta\varphi_L, r) = \Delta\varphi_L \cdot r \quad (2)$$

Die Abmessung d des Messbereichs unter einem bestimmten Winkel $\varphi_L$ ist somit direkt proportional zum Radius r des Prüfobjekts 2. Für einen möglichst kleinen Messbereich muss $\Delta\varphi_L$ möglichst klein sein. Der Öffnungswinkel $\Delta\varphi_L$ ist vom Winkel $\varphi_R$ abhängig. Der Winkel $\Delta\varphi_L$ ist umso kleiner, je kleiner $\varphi_R$ ist.

Darüber hinaus ist der Winkel $\Delta\varphi_L$ von den Längen a und b der Halbachsen A und B abhängig.

Mittels einer einzigen Sender-Empfänger-Einheit 3 sowie der zugehörigen Spiegel-Anordnung 4 kann das Prüfobjekt 2 somit vollständig vermessen werden. Trotz der divergenten Strahlausbreitung trifft die Strahlung S bzw. der jeweilige THz-Puls radial auf die Grenzschichten des Prüfobjekts 2, also senkrecht auf die Grenzschichten und zudem zu gleichen Zeitpunkten. Hierdurch wird gewährleistet, dass die reflektierte Strahlung R eine hohe Signalqualität aufweist und insbesondere die reflektierten THz-Pulse nicht verwaschen und in ihrer Amplitude abgeschwächt sind.

Dadurch, dass die Spiegeloberfläche $S_1$ auch in der z-Richtung elliptisch gekrümmt ist, wird die Strahlung S, R auch in der z-Richtung fokussiert. Der erste Spiegel 7 ist in der z-Richtung vorzugsweise derart elliptisch gekrümmt, dass ein erster Brennpunkt mit dem ersten Brennpunkt $B_1$ zusammenfällt und ein zweiter Brennpunkt auf der äußeren Oberfläche des Prüfobjekts 2 liegt. Dies ist in Fig. 1 veranschaulicht. Die Strahlung S weist somit auch in der z-Richtung einen optimierten, also einen möglichst kleinen Messbereich auf.

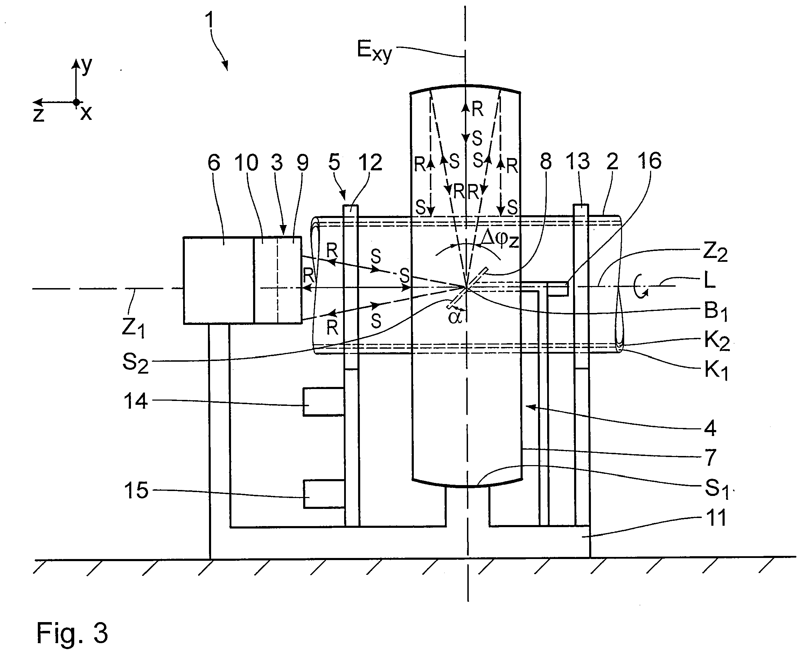

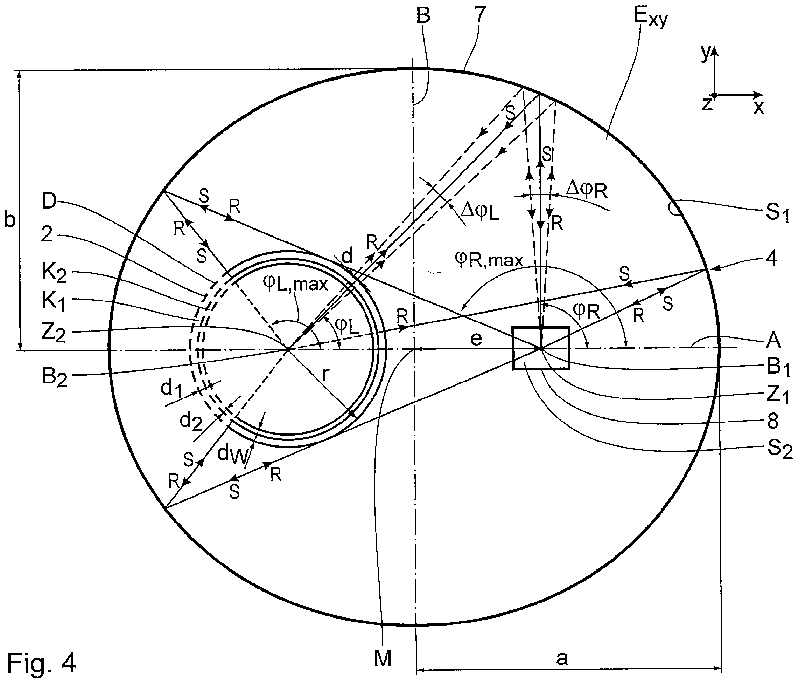

Nachfolgend ist anhand der Fig. 3 und 4 ein zweites Ausführungsbeispiel der Erfindung beschrieben. Im Unterschied zu dem ersten Ausführungsbeispiel ist der zweite Spiegel 8 um die erste z-Achse $Z_1$ mittels einer dritten Antriebseinheit 16 verschwenkbar, insbesondere um 360° drehbar. Der Winkel $\varphi_R$ ist somit durch die Drehung veränderbar. Hierdurch ist das Prüfobjekt 2, selbst wenn dieses um die zweite z-Achse $Z_2$ fest steht, in einem weiten Umfangsbereich vermessbar. In Fig. 4 sind im Vergleich zu Fig. 2 zusätzliche Strahlverläufe der Strahlung S eingezeichnet, die eine Vermessung des Prüfobjekts 2 veranschaulichen. Unabhängig von dem Winkel $\varphi_R$ wird die Strahlung S mittels des ersten Spiegels 7 zwischen den Brennpunkten $B_1$ und $B_2$ umgelenkt. Beim Vermessen des Prüfobjekts 2 trifft die Strahlung S unabhängig von dem Winkel $\varphi_R$ immer radial bzw. senkrecht auf das Prüfobjekt 2.

Bei einem Winkel $\varphi_{R,max}$ tangiert die zu dem Prüfobjekt 2 verlaufende Strahlung S das Prüfobjekt 2, so dass das Prüfobjekt 2 bei größeren Winkeln als $\varphi_{R,max}$ an einer dem zweiten Spiegel 8 abgewandten Seite abgeschattet wird. Der abgeschattete Bereich des Prüfobjekts 2 ist in Fig. 4 gestrichelt dargestellt und mit D bezeichnet. Für den Winkel $\varphi_{R,max}$ gilt:

$$\varphi_{R,max} = \pi - \arcsin\left(\frac{r}{2e}\right) \tag{3}$$

Die Strahlung S trifft bei einem Winkel $\varphi_{R,max}$ unter einem Winkel $\varphi_{L,max}$ auf das Prüfobjekt 2, so dass der maximal vermessbare Winkelbereich des Prüfobjekts 2, wenn dieses um die zweite z-Achse $Z_2$ fest steht, $2\varphi_{L,max}$ beträgt.

Der abgeschattete Bereich D wird dadurch vermessen, dass das Prüfobjekt 2 entsprechend dem ersten Ausführungsbeispiel um die zweite z-Achse $Z_2$ verschwenkt wird. Im Unterschied zu dem ersten Ausführungsbeispiel muss das Prüfobjekt 2 jedoch nicht um 360° um die zweite Z-Achse $Z_2$ drehbar sein, sondern lediglich derart verschwenkbar sein, dass der abgeschattete Bereich D in einer verschwenkten Position in dem vermessbaren Winkelbereich $2\varphi_{L,max}$ liegt.

Gemäß Gleichung (1) ist der Divergenzwinkel $\Delta\varphi_L$ abhängig von dem Winkel $\varphi_R$. Die Änderung von $\Delta\varphi_L$ in Abhängigkeit von dem Winkel $\varphi_R$ ist jedoch umso geringer, je näher die Längen a der großen Halbachse A und b der kleinen Halbachse B beieinander liegen. Die Messgenauigkeit der Terahertz-Messvorrichtung 1 ist somit umso weniger abhängig von dem Winkel $\varphi_R$, je näher das Verhältnis a/b bei 1 liegt.

Ein weiterer Unterschied im Vergleich zum ersten Ausführungsbeispiel ist, dass der erste Spiegel 7 in der z-Richtung parabolisch gekrümmt ist, wobei der erste Brennpunkt $B_1$ bei allen Winkeln $\varphi_R$ mit dem Brennpunkt der Parabel zusammenfällt. Durch Reflexion der Strahlung S wird die Strahlung S in der z-Richtung kollimiert. Dies ist in Fig. 3 veranschaulicht. Durch die parabolische Krümmung des ersten Spiegels 7 wird die Strahlung S in der z-Richtung kollimiert, so dass alle Strahlen bzw. Teilstrahlen unabhängig vom Radius r des Prüfobjekts 2 immer senkrecht auf das Prüfobjekt 2 einfallen. Die Ausdehnung des Messbereichs in der z-Richtung ist der Durchmesser der kollimierten Strahlung S, der durch den Divergenzwinkel $\Delta\varphi_Z$ gegeben ist bzw. einstellbar ist.

Hinsichtlich des weiteren Aufbaus und der weiteren Funktionsweise wird auf das erste Ausführungsbeispiel verwiesen.

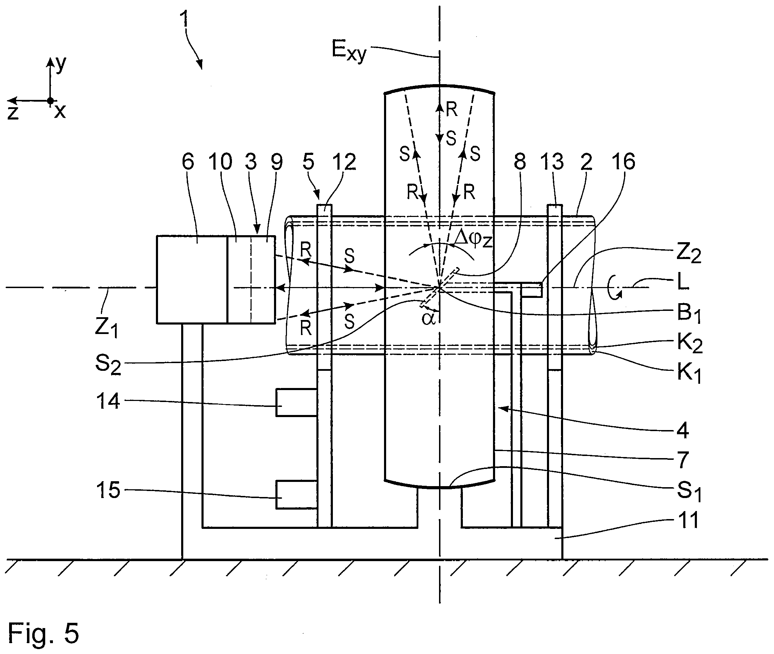

Nachfolgend ist anhand von Fig. 5 ein drittes Ausführungsbeispiel der Erfindung beschrieben. Im Unterschied zu den vorangegangenen Ausführungsbeispielen ist der erste Spiegel 7 entlang der z-Richtung sphärisch gekrümmt. Der erste Spiegel 7 ist somit ein Rotationsellipsoid, das bei Rotation um eine y-Achse entsteht. Die Strahlung S ist somit in der x-y-Ebene $E_{xy}$ und entlang der z-Richtung in den zweiten Brennpunkt $B_2$ fokussiert. Dies ist insbesondere vorteilhaft, wenn der Radius r des Prüfobjekts 2 wesentlich kleiner als die Längen a bzw. b ist. Hinsichtlich des weiteren Aufbaus und der weiteren Funktionsweise wird auf die vorangegangenen Ausführungsbeispiele verwiesen.

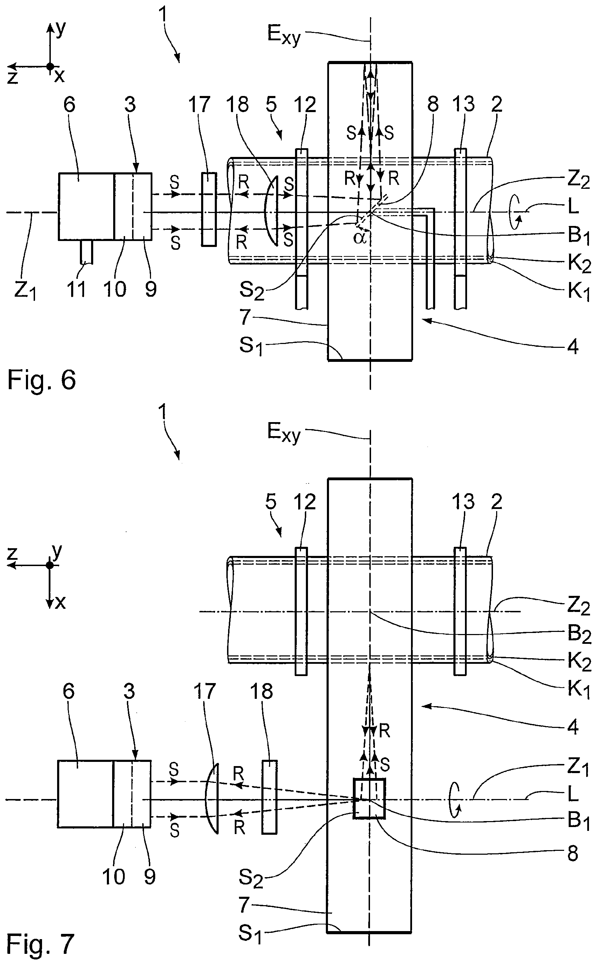

Nachfolgend ist anhand der Fig. 6 und 7 ein viertes Ausführungsbeispiel der Erfindung beschrieben. Im Unterschied zu den vorangegangenen Ausführungsbeispielen ist der erste Spiegel 7 in der z-Richtung plan ausgebildet. Zur Fokussierung der Strahlung S sind zwei Fokussier-Elemente 17, 18 im Strahlengang zwischen der Sender-Empfänger-Einheit 3 und dem zweiten Spiegel 8 angeordnet. Die Fokussier-Elemente 17, 18 rotieren zusammen mit dem zweiten Spiegel 8 um die erste z-Achse $Z_1$. Die einfallende kollimierte Strahlung S wird mittels dem ersten Fokussier-Element 17 in der x-Richtung auf den ersten Brennpunkt $B_1$ fokussiert. Hierzu ist das erste Fokussier-Element 17 als zylindrische Linse ausgebildet. Das zweite Fokussier-Element 18 fokussiert die Strahlung in der y-Richtung, wodurch nach Reflexion der Strahlung S an dem zweiten Spiegel 8 die Strahlung S in der z-Richtung fokussiert wird. Dies ist in Fig. 6 veranschaulicht. Das zweite Fokussier-Element 18 ist ebenfalls als zylindrische Linse ausgebildet, deren Zylinder in der x-Richtung ausgerichtet ist und senkrecht zu dem in der y-Richtung ausgerichteten Zylinder der Linse 17 verläuft.

Der Abstand der Linse 18 bis zu der Oberfläche des Prüfobjekts 2 entspricht der Brennweite der Linse 18. Die Strahlung S divergiert somit lediglich in der x-y-Ebene $E_{xy}$. Durch Veränderung der Position der zweiten Linse 18 entlang der z-Achse $Z_1$ erfolgt eine Fokussierung der Strahlung S in der z-Richtung auf Prüfobjekte 2 mit verschiedenem Radius r. Das bedeutet, die Fokussierung in z-Richtung kann auf Prüfobjekte 2 mit unterschiedlichem Radius r durch Verändern der Position der zweiten Linse 18 entlang der z-Achse $Z_1$ angepasst werden. Alternativ können der zweite Spiegel 8 und das zweite Fokussier-Element 18 integriert ausgebildet sein, so dass der zweite Spiegel 8 aufgrund einer Krümmung selbst eine Fokussierung in der z-Richtung bewirkt. Hinsichtlich des weiteren Aufbaus und der weiteren Funktionsweise wird auf die vorangegangenen Ausführungsbeispiele verwiesen.

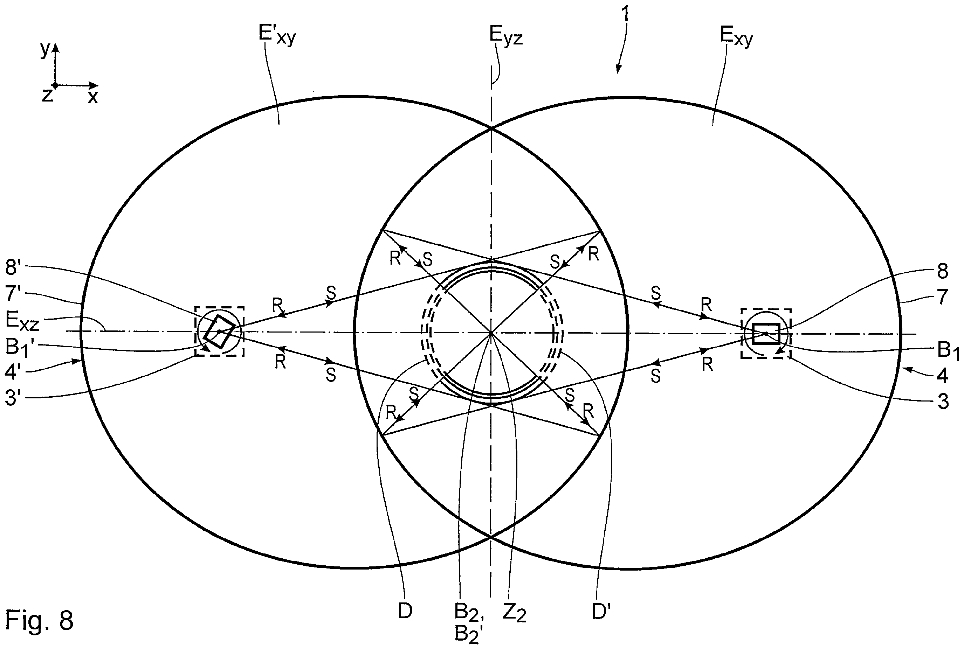

Nachfolgend ist anhand von Fig. 8 ein fünftes Ausführungsbeispiel der Erfindung beschrieben. Im Unterschied zu den vorangegangenen Ausführungsbeispielen weist die Messvorrichtung 1 genau zwei Spiegel-Anordnungen 4 und zwei zugehörige Sender-Empfänger-Einheiten 3 auf. Zur Unterscheidung wird die zweite Spiegel-Anordnung 4 sowie die zugehörigen Bauteile nachfolgend mit einem' bezeichnet. Die Spiegel-Anordnungen 4 und 4' sind identisch ausgebildet, jedoch entlang der z-Richtung zueinander beabstandet und derart zueinander gedreht, dass die zweiten Brennpunkte $B_2$ und $B_2'$ beabstandet zueinander auf der zweiten z-Achse $Z_2$ liegen und die ersten Brennpunkte $B_1$ und $B_1'$ in einer durch die zweiten Brennpunkte $B_2$ und $B_2'$ verlaufenden x-z-Ebene $E_{xz}$. Die Brennpunkte $B_1$ und $B_1'$ sind somit von einer durch die zweiten Brennpunkte $B_2$ und $B_2'$ verlaufenden, y-z-Ebene $E_{yz}$ maximal beabstandet. Die zweiten Spiegel 8, 8' sind um ihre zugehörigen und durch den jeweiligen ersten Brennpunkt $B_1$, $B_1'$ verlaufenden ersten z-Achsen $Z_1$ und $Z_1'$ drehbar. Das Prüfobjekt 2 wird inline im Herstellungsprozess vermessen und ist dementsprechend um die eigene Mittellängsachse L, also um die zweite z-Achse $Z_2$ bzw. $Z_2'$ nicht verschwenkbar. Wie zu dem zweiten Ausführungsbeispiel bereits erläutert wurde, hat das Prüfobjekt 2 bei der Vermessung durch die jeweilige Spiegel-Anordnung 4, 4' und die zugehörige Sender-Empfänger-Einheit 3, 3' einen abgeschatteten Bereich D, D'. Durch die Positionierung der Spiegel-Anordnungen 4, 4' kann jedoch die Spiegel-Anordnung 4' den abgeschatteten Bereich D der Spiegel-Anordnung 4 vermessen und entsprechend die Spiegel-Anordnung 4 den abgeschatteten Bereich D' der Spiegel-Anordnung 4'. Somit ist das Prüfobjekt 2 vollumfänglich vermessbar, obwohl dieses nicht verschwenkbar bzw. drehbar ist. Das Prüfobjekt 2 weist aufgrund des Herstellungsprozesses eine Extrusionsrichtung auf, die in der z-Richtung verläuft, so dass das Prüfobjekt 2 auch entlang seiner Länge vermessbar ist bzw. vermessen wird. Der Prüfobjekthalter 5 muss das Prüfobjekt 2 somit weder aktiv verschwenken noch linear verfahren und kann dementsprechend einen vereinfachten Aufbau derart aufweisen, dass lediglich eine Führung des Prüfobjekts 2 gewährleistet ist.

Ein Anwendungsbereich der Messvorrichtung 1 ist somit die Inline-Vollprüfung der Wanddicke $d_W$ und der Schichtdicken $d_1$ und $d_2$ des als Kunststoffrohr ausgebildeten Prüfobjekts 2 im Extrusionsprozess. Die Vermessung des Prüfobjekts 2 erfolgt entsprechend den vorangegangenen Ausführungsbeispielen kontaktfrei und ohne jegliches Kopplungsmedium. Dadurch, dass für die vollständige bzw. vollumfängliche Vermessung des Prüfobjekts 2 lediglich zwei Sender-Empfänger-Einheiten 3, 3' erforderlich sind, bleibt der Aufbau vergleichsweise einfach, wodurch die Messvorrichtung 1 ein akzeptables Kosten-Nutzen-Verhältnis gewährleistet. Falls mehr als zwei Spiegel-Anordnungen 4 und entsprechend zugehörige Sender-Empfänger-Einheiten 3 benötigt werden, ist dies bei der Messvorrichtung 1 selbstverständlich möglich. Die Sender-Empfänger-Einheiten 3, 3' sind zudem ortsfest zu den zugehörigen ersten Spiegeln 7, 7' angeordnet, wodurch ebenfalls ein einfacher Aufbau gewährleistet ist.

Hinsichtlich des weiteren Aufbaus und der weiteren Funktionsweise wird auf die vorangegangenen Ausführungsbeispiele verwiesen.

Die Merkmale der beschriebenen Ausführungsbeispiele können beliebig miteinander kombiniert werden. Insbesondere kann die Fokussierung bzw. Kollimation der Strahlung S in der z-Richtung je nach Bedarf erfolgen und beliebig mit anderen Merkmalen der Messvorrichtung 1 kombiniert werden. Zudem kann die Spiegeloberfläche $S_1$ des jeweiligen ersten Spiegels 7 bzw. 7' in der z-Richtung dahingehend optimiert werden, dass für einen vordefinierten Radiusbereich des Prüfobjekts 2 ein Messbereich bzw. Messpunkt mit akzeptabler Fokusgröße erzielt wird. Hierzu kann die Spiegeloberfläche $S_1$ in der z-Richtung als Freiformfläche ausgebildet sein.

Der bevorzugte Anwendungsbereich der erfindungsgemäßen Messvorrichtung 1 ist die Vollprüfung bzw. Inline-Vollprüfung von Wand- und/oder Schichtdicken von Kunststoffrohren, insbesondere im Herstellungs- bzw. Extrusionsprozess.

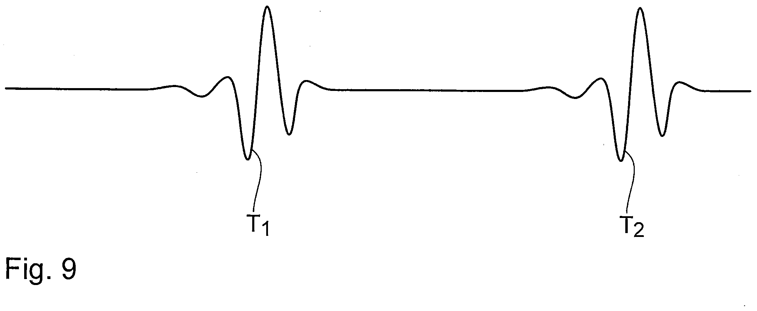

Die emittierte Strahlung ist insbesondere als gepulste THz-Strahlung, als CW-THz-Strahlung (CW: Continuous Wave) und/oder als FMCW-THz-Strahlung (FMCW: Frequency Modulated Continuous Wave) ausgebildet. Ein zeitlicher Verlauf einer gepulsten THz-Strahlung ist in Fig. 9 dargestellt. Die aufeinanderfolgenden THz-Pulse $T_1$ und $T_2$ sowie entsprechende weitere THz-Pulse weisen jeweils ein Frequenzspektrum auf, das in dem erwähnten THz-Bereich liegt. Mittels der THz-Strahlung erfolgen die Messungen kontaktfrei und ohne Kopplungsmedium.

Darüber hinaus können mit der erfindungsgemäßen Messvorrichtung 1 weitere Auswertungen bzw. Messungen vorgenommen werden. Beispielsweise kann die Position der Mittellängsachse L des Prüfobjekts 2 relativ zu dem zweiten Brennpunkt $B_2$ bestimmt werden. Aufgrund der elliptischen Krümmung des ersten Spiegels 7 bzw. 7' ist die Wegstrecke eines Strahlengangs, der von einem Brennpunkt mittels Reflexion an der Spiegeloberfläche $S_1$ in den anderen Brennpunkt übergeht, immer konstant. Bei einem konzentrisch zu dem zweiten Brennpunkt $B_2$ angeordneten Prüfobjekts 2

haben dementsprechend alle Strahlengänge die exakt gleiche Wegstrecke. Somit ändert sich die Laufzeit der reflektierten Strahlung R bzw. THz-Pulse nicht und die detektierte zeitliche Position bleibt beim Abtasten des Prüfobjekts 2 konstant. Fallen die Mittellängsachse L und der zweite Brennpunkt $B_2$ nicht zusammen, ändert sich die zeitliche Position der THz-Pulse beim Abtasten des Prüfobjekts 2. Die THz-Pulse, die entlang der durch die Mittellängsachse L und den zweiten Brennpunkt $B_2$ definierten Geraden einfallen, weisen die maximalen Pulsverschiebungen auf. Somit ist die Richtung der Verschiebung als auch die Größe der Verschiebung aus der maximalen Laufzeitdifferenz gegeben und kann bei der Auswertung ermittelt werden. Die Position der Mittellängsachse L relativ zu dem zweiten Brennpunkt $B_2$ kann somit bestimmt werden. Diese Informationen können beispielsweise für das automatische Einjustieren des Prüfobjekts 2 beim Anfahren des Extrusionsprozesses oder für eine gegebenenfalls notwendige Nachjustierung der Messvorrichtung 1 verwendet werden. Eine Referenzmessung ist nicht erforderlich.

Aus der Laufzeit der THz-Pulse kann außerdem der Durchmesser bzw. Radius r des Prüfobjekts 2 sowie etwaige Abweichungen von der Kreisform, wie beispielsweise Exzentrizität oder Ovalität bestimmt werden. Der Durchmesser des Prüfobjekts 2 ergibt sich bei bekannten Parametern des elliptischen Spiegels 7 bzw. 7' direkt aus der Laufzeit des jeweiligen THz-Pulses. Formparameter, wie Exzentrizität und Ovalität, können aus den Abweichungen der Laufzeit einzelner THz-Pulse berechnet werden.

**Patentansprüche**

1. Terahertz-Messvorrichtung zur Vermessung von Prüfobjekten, insbesondere aus Kunststoff, mit

- mindestens einer Sender-Empfänger-Einheit (3; 3, 3') mit

-- einem Sender (9) zum Emittieren von Terahertz-Strahlung (S) im Terahertz-Frequenzbereich von 0,01 THz bis 50 THz,
-- einem zugehörigen Empfänger (10) zum Detektieren einer am Prüfobjekt (2) reflektierten Strahlung (R) im Terahertz-Frequenzbereich von 0,01 THz bis 50 THz,

- mindestens einer Spiegel-Anordnung (4; 4, 4') mit

- einem ersten Spiegel (7; 7, 7'),

-- der in einer x-y-Ebene ($E_{xy}$; $E_{xy}$, $E_{xy}$') einen ersten Brennpunkt ($B_1$; $B_1$, $B_1$') und einen zweiten Brennpunkt ($B_2$; $B_2$, $B_2$') ausbildet ist, und
-- der zur Umlenkung der Strahlung (S, R) zwischen den Brennpunkten ($B_1$, $B_2$; $B_1$, $B_2$, $B_1$', $B_2$') zumindest abschnittsweise elliptisch gekrümmt ist,

- einem im Bereich des ersten Brennpunkts ($B_1$; $B_1$, $B_1$') angeordneten zweiten Spiegel (8; 8, 8') zur Umlenkung der Strahlung (S, R) zwischen einer quer zu der x-y-Ebene ($E_{xy}$; $E_{xy}$, $E_{xy}$') verlaufenden z-Richtung und der x-y-Ebene ($E_{xy}$; $E_{xy}$, $E_{xy}$'),

- einem Prüfobjekthalter (5) zur Anordnung des Prüfobjekts (2) im Bereich des zweiten Brennpunkts ($B_2$; $B_2$, $B_2$'), und
- einer Steuereinheit (6),

wobei die Steuereinheit (6) mit dem Sender (3) und dem Empfänger (11) verbunden ist zur Ansteuerung des Senders (3) und Auswertung der von dem Empfänger detektierten reflektierten Strahlung (R) und Ermittlung einer Wanddicke (dw) oder Schichtdicke des Prüfobjekts (2).

2. Terahertz-Messvorrichtung nach Anspruch 1, **dadurch gekennzeichnet,**
**dass** die mindestens eine Sender-Empfänger-Einheit (3; 3, 3') entlang einer parallel zu der z-Richtung durch den ersten Brennpunkt ($B_1$; $B_1$, $B_1$') verlaufenden z-Achse ($Z_1$; $Z_1$, $Z_1$') angeordnet ist.

3. Terahertz-Messvorrichtung nach Anspruch 1 oder 2, **dadurch gekennzeichnet,**
**dass** mindestens zwei Spiegel-Anordnungen (4, 4'), insbesondere genau zwei Spiegel-Anordnungen (4, 4'), in der z-Richtung versetzt zueinander angeordnet sind und deren jeweilige erste Brennpunkte ($B_1$, $B_1$') quer zu der z-Richtung beabstandet sind, wobei die mindestens zwei Spiegel-Anordnungen (4, 4') insbesondere identisch aufgebaut sind.

**4.** Terahertz-Messvorrichtung nach Anspruch 3, **dadurch gekennzeichnet,** **dass** die jeweiligen zweiten Brennpunkte ($B_2$, $B_2$') auf einer Geraden ($Z_2$) liegen, die parallel zu der z-Richtung verläuft.

**5.** Terahertz-Messvorrichtung nach Anspruch 3 oder 4, **dadurch gekennzeichnet,** **dass** die jeweiligen ersten Brennpunkte ($B_1$, $B_1$') der genau zwei Spiegel-Anordnungen (4, 4') auf verschiedenen Seiten einer durch die zweiten Brennpunkte ($B_2$, $B_2$') verlaufenden y-z-Ebene ($E_{yz}$) liegen.

**6.** Terahertz-Messvorrichtung nach einem der Ansprüche 1 bis 5, **dadurch gekennzeichnet, dass** jeder Spiegel-Anordnung (4, 4') eine Sender-Empfänger-Einheit (3, 3') zugeordnet ist.

**7.** Terahertz-Messvorrichtung nach einem der Ansprüche 1 bis 6, **dadurch gekennzeichnet, dass** der zweite Spiegel (8; 8, 8') um eine parallel zu der z-Richtung durch den ersten Brennpunkt ($B_1$; $B_1$, $B_1$') verlaufende z-Achse ($Z_1$; $Z_1$, $Z_1$') verschwenkbar ist.

**8.** Terahertz-Messvorrichtung nach einem der Ansprüche 1 bis 7, **dadurch gekennzeichnet, dass** der Prüfobjekthalter (5) derart ausgebildet ist, dass das Prüfobjekt (2) um eine durch den zweiten Brennpunkt ($B_2$; $B_2$, $B_2$') verlaufende Drehachse ($Z_2$; $Z_2$, $Z_2$') verschwenkbar ist.

**9.** Terahertz-Messvorrichtung nach einem der Ansprüche 1 bis 8, **dadurch gekennzeichnet, dass** der jeweilige erste Spiegel (7; 7, 7') entlang einer Ellipse gekrümmt ist, wobei die Ellipse definiert ist durch eine erste Halbachse (A) mit einer Länge a und einer im Vergleich zu der ersten Halbachse (A) kürzeren zweiten Halbachse (B) mit einer Länge b, wobei für ein Verhältnis der Längen gilt: $a/b \leq 1{,}3$, insbesondere $a/b \leq 1{,}2$, und insbesondere $a/b \leq 1{,}1$.

**10.** Terahertz-Messvorrichtung nach einem der Ansprüche 1 bis 9, **dadurch gekennzeichnet, dass** der jeweilige erste Spiegel (7; 7, 7') in der z-Richtung eine konkave Krümmung aufweist, wobei die Krümmung insbesondere aus der Gruppe parabolisch, elliptisch und sphärisch ausgewählt ist.

**11.** Terahertz-Messvorrichtung nach einem der Ansprüche 1 bis 9, **dadurch gekennzeichnet, dass** der jeweilige erste Spiegel (7; 7, 7') in der z-Richtung plan ausgebildet ist und mindestens ein Fokussier-Element (18) zur Fokussierung der Terahertz-Strahlung (S) in z-Richtung vorgesehen ist.

**12.** Verfahren zur Vermessung von Prüfobjekten, insbesondere aus einem Kunststoff, und zur Ermittlung einer Wanddicke (dw) oder Schichtdicke der Prüfobjekte (2), umfassend die Schritte:

- Bereitstellen einer Terahertz-Messvorrichtung (1) nach mindestens einem der Ansprüche 1 bis 11,
- Anordnen eines Prüfobjekts (2) derart, dass dessen Mittellängsachse (L) durch den zweiten Brennpunkt ($B_2$; $B_2$, $B_2$') verläuft,
- Emittieren von Terahertz-Strahlung (S) im Bereich von 0,01 THz bis 50 THz, mittels des Senders (9),
- Umlenken der emittierten Terahertz-Strahlung (S) mittels des zweiten Spiegels (8; 8, 8') und des ersten Spiegels (7; 7, 7') in Richtung des zweiten Brennpunkts ($B_2$; $B_2$, $B_2$'),
- Reflektieren der Terahertz-Strahlung (S) an dem Prüfobjekt (2),
- Umlenken der reflektierten Terahertz -Strahlung (R) mittels des ersten Spiegels (7; 7, 7') und des zweiten Spiegels (8; 8, 8') in Richtung des Empfängers (10),
- Detektieren der reflektierten Terahertz-Strahlung (R) mittels des Empfängers (10),
- Auswerten der detektierten Strahlung (R), und
- Ermitteln einer Wanddicke (dw) oder Schichtdicke aus der detektierten reflektierten Terahertz -Strahlung (R).

**13.** Verfahren nach Anspruch 12, **dadurch gekennzeichnet, dass** das Prüfobjekt (2) und der zweite Spiegel (8; 8, 8') relativ zueinander verschwenkt werden, insbesondere der zweite Spiegel (8; 8, 8') um die parallel zu der z-Richtung durch den ersten Brennpunkt ($B_1$; $B_1$, $B_1$') verlaufende z-Achse ($Z_1$; $Z_1$, $Z_1$') verschwenkt wird.

**14.** Verfahren nach Anspruch 12 oder 13, **dadurch gekennzeichnet, dass** das Prüfobjekt (2) zumindest abschnittsweise mindestens eine hohlzylinderförmige Materialschicht ($K_1$, $K_2$) aufweist, wobei die Materialschicht ($K_1$, $K_2$) insbeson-dere aus einem Kunststoff ist.

**15.** Verfahren nach Anspruch 14, **dadurch gekennzeichnet, dass** die Vermessung und Ermittlung einer Wanddicke (dw) oder Schichtdicke mindestens einer hohlzylinderförmigen Materialschicht über den gesamten Umfang des Prüfobjekts (2) durchgeführt wird.

**Claims**

1. Terahertz measuring device for measuring test objects, in particular of plastics material, having

   - at least one transmitter/receiver unit (3; 3, 3') having

      -- a transmitter (9) for emitting terahertz radiation (S) in the terahertz frequency range from 0.01 THz to 50 THz,
      -- an associated receiver (10) for detecting a radiation (R) which is reflected on the test object (2) in the terahertz frequency range from 0.01 THz to 50 THz,

   - at least one mirror arrangement (4; 4, 4') having

      -- a first mirror (7; 7, 7'),

         --- which is constructed in an x-y plane ($E_{xy}$; $E_{xy}$, $E_{xy}$') with a first focal point ($B_1$; $B_1$, $B_1$') and a second focal point ($B_2$; $B_2$, $B_2$'), and
         --- which is curved at least partially in an elliptical manner in order to redirect the radiation (S, R) between the focal points ($B_1$, $B_2$; $B_1$, $B_2$, $B_1$', $B_2$'),

      -- having a second mirror (8; 8, 8') which is arranged in the region of the first focal point ($B_1$; $B_1$, $B_1$') in order to redirect the radiation (S, R) between a z direction which extends transversely relative to the x-y plane ($E_{xy}$; $E_{xy}$, $E_{xy}$') and the x-y plane ($E_{xy}$; $E_{xy}$, $E_{xy}$'),

   - a test object holder (5) for arranging the test object (2) in the region of the second focal point ($B_2$; $B_2$, $B_2$'), and
   - having a control unit (6),

   wherein the control unit (6) is connected to the transmitter (3) and the receiver (11) for controlling the transmitter (3) and evaluating the reflected radiation (R) detected by the receiver and establishing a wall thickness (dw) or layer thickness of the test object (2).

2. Terahertz measurement device according to Claim 1, **characterised in that** the at least one transmitter/receiver unit (3; 3, 3') is arranged along a z axis ($Z_1$, $Z_1$, $Z_1$') which extends parallel with the z direction through the first focal point ($B_1$; $B_1$, $B_1$').

3. Terahertz measurement device according to Claim 1 or 2, **characterised in that** at least two mirror arrangements (4, 4'), in particular precisely two mirror arrangements (4, 4'), are arranged offset with respect to each other in the z direction and the first respective focal points ($B_1$, $B_1$') thereof are spaced apart from each other transversely relative to the z direction, wherein the at least two mirror arrangements (4, 4') are in particular constructed in an identical manner.

4. Terahertz measurement device according to Claim 3, **characterised in that** the respective second focal points ($B_2$, $B_2$') are located on a straight line ($Z_2$) which extends parallel with the z direction.

5. Terahertz measurement device according to Claim 3 or 4, **characterised in that** the respective first focal points ($B_1$, $B_1$') of the precisely two mirror arrangements (4, 4') are located at different sides of a y-z plane ($E_{yz}$) which extends through the second focal points ($B_2$, $B_2$').

6. Terahertz measurement device according to any one of Claims 1 to 5, **characterised in that** a transmitter/receiver unit (3, 3') is associated with each mirror arrangement (4, 4').

7. Terahertz measurement device according to any one of Claims 1 to 6, **characterised in that** the second mirror (8; 8, 8') can be pivoted about a z axis ($Z_1$; $Z_1$, $Z_1$') which extends parallel with the z direction through the first focal point ($B_1$; $B_1$, $B_1$').

8. Terahertz measurement device according to any one of Claims 1 to 7, **characterised in that** the test object holder (5) is constructed in such a manner that the test object (2) can be pivoted about a rotation axis ($Z_2$; $Z_2$, $Z_2$') which extends through the second focal point ($B_2$; $B_2$, $B_2$').

9. Terahertz measurement device according to any one of Claims 1 to 8, **characterised in that** the respective first mirror (7; 7, 7') is curved along an ellipse, wherein the ellipse is defined by means of a first half-axis (A) with a length a and a second half-axis (B) which is shorter in comparison with the first half axis (A) with a length b, wherein there applies to a relationship of the lengths: a/b ≤ 1.3, in particular a/b ≤ 1.2 and in particular a/b ≤ 1.1.

10. Terahertz measurement device according to any one of Claims 1 to 9, **characterised in that** the respective first mirror (7; 7, 7') has a concave curvature in the z direction, wherein the curvature is selected in particular from the group parabolic, elliptical and spherical.

11. Terahertz measurement device according to any one of Claims 1 to 9, **characterised in that** the respective first mirror (7; 7, 7') is constructed to be planar in the z direction and at least one focusing element (18) is provided to focus the terahertz radiation (S) in the z direction.

12. Method for measuring test objects, in particular of a plastics material, and for establishing a wall thickness (dw) or layer thickness of the test objects (2), comprising the steps of:

   - providing a terahertz measurement device (1) according to at least one of Claims 1 to 11,
   - arranging a test object (2) in such a manner that the longitudinal centre axis (L) thereof extends through the second focal point ($B_2$; $B_2$, $B_2$'),
   - emitting terahertz radiation (S) in the range from 0.01 THz to 50 THz by means of the transmitter (9),
   - redirecting the emitted terahertz radiation (S) by means of the second mirror (8; 8, 8') and the first mirror (7;, 7, 7') in the direction of the second focal point ($B_2$; $B_2$, $B_2$').
   - reflecting the terahertz radiation (S) on the test object (2),
   - redirecting the reflected terahertz radiation (R) by means of the first mirror (7; 7, 7') and the second mirror (8; 8, 8') in the direction of the receiver (10),
   - detecting the reflected terahertz radiation (R) by means of the receiver (10),
   - evaluating the detected radiation (R), and
   - establishing a wall thickness (dw) or layer thickness from the detected reflected terahertz radiation (R).

13. Method according to Claim 12, **characterised in that** the test object (2) and the second mirror (8; 8, 8') are pivoted relative to each other, in particular the second mirror (8; 8, 8') is pivoted about the z axis ($Z_1$; $Z_1$, $Z_1$') which extends parallel with the z direction through the first focal point ($B_1$; $B_1$, $B_1$').

14. Method according to Claim 12 or 13, **characterised in that** the test object (2) at least partially has at least one hollow-cylindrical material layer ($K_1$, $K_2$), wherein the material layer ($K_1$, $K_2$) is in particular produced from a plastics material.

15. Method according to Claim 14, **characterised in that** the measurement and establishment of a wall thickness (dw) or layer thickness of at least one hollow-cylindrical material layer is carried out over the entire periphery of the test object (2).

**Revendications**

1. Dispositif de mesure térahertz pour mesurer des objets d'essai, notamment des objets d'essai en matière artificielle, le dispositif comprenant

   - au moins une unité émettrice-réceptrice (3; 3, 3') comportant

      -- un émetteur (9) pour émettre un rayonnement térahertz (S) dans une plage de fréquences térahertz allant de 0,01 THz à 50 THz,
      -- un récepteur associé (10) pour détecter un rayonnement réfléchi (R) par l'objet d'essai (2) dans la plage de fréquences térahertz allant de 0,01 THz à 50 THz,

- au moins un arrangement de miroirs (4 ;4,4') comportant

-- un premier miroir (7; 7, 7'),

--- qui forme un premier foyer ($B_1$, $B_1$') et un second foyer ($B_2$; $B_2$, $B_2$') sur un plan x-y ($E_{xy}$; $E_{xy}$, $E_{xy}$') et
--- qui présente, au moins par tronçons, une courbure elliptique destinée à dévier le rayonnement (S, R) entre les foyers ($B_1$ ; $B_2$; $B_1$, $B_2$, $B_1$', $B_2$'),

-- un second miroir (8; 8, 8') disposé dans la zone du premier foyer ($B_1$ ; $B_1$, $B_1$') destiné à dévier le rayonnement (S, R) entre une direction z s'étendant transversalement au plan x-y ($E_{xy}$; $E_{xy}$, $E_{xy}$') et le plan x-y ($E_{xy}$; $E_{xy}$, $E_{xy}$'),

- un support d'objet d'essai (5) pour disposer l'objet d'essai (2) dans la zone du second foyer ($B_2$; $B_2$, $B_2$') et
- une unité de commande (6),

l'unité de commande (6) étant reliée à l'émetteur (3) et au récepteur (11) pour commander l'émetteur (3) et évaluer le rayonnement réfléchi (R) détecté par le récepteur et déterminer une épaisseur de paroi (dw) ou une épaisseur de couche de l'objet d'essai (2).

2. Dispositif de mesure térahertz suivant la revendication 1, **caractérisé en ce que** l'au moins une unité émettrice-réceptrice (3; 3,3') est disposée le long d'un axe z ($Z_1$; $Z_1$, $Z_1$') qui s'étend parallèlement à la direction z, à travers le premier foyer ($B_1$; $B_1$, $B_1$').

3. Dispositif de mesure térahertz suivant la revendication 1 ou 2, **caractérisé en ce qu'**au moins deux arrangements de miroirs (4, 4'), à savoir, exactement deux arrangements de miroirs (4, 4'), sont disposés de façon décalée l'un par rapport à l'autre dans la direction z et dont les premiers foyers respectifs ($B_1$, $B_1$') sont espacés transversalement à la direction z, les au moins deux arrangements de miroirs (4, 4') présentant en particulier une conception identique.

4. Dispositif de mesure térahertz suivant la revendication 3, **caractérisé en ce que** les seconds foyers respectifs ($B_2$; $B_2$') se situent sur une droite ($Z_2$) qui s'étend parallèlement à la direction z.

5. Dispositif de mesure térahertz suivant la revendication 3 ou 4, **caractérisé en ce que** les premiers foyers respectifs ($B_1$, $B_1$') des exactement deux arrangements de miroirs (4, 4') se situent sur des côtés différents d'un plan y-z ($E_{yz}$) qui s'étend à travers les deux foyers ($B_2$, $B_2$').

6. Dispositif de mesure térahertz suivant une des revendications 1 à 5, **caractérisé en ce qu'**une unité émettrice-réceptrice (3, 3') est associée à chaque arrangement de miroirs (4, 4').

7. Dispositif de mesure térahertz suivant une des revendications 1 à 6, **caractérisé en ce que** le second miroir (8; 8, 8') peut être pivoté autour d'un axe z ($Z_1$; $Z_1$, $Z_1$') qui s'étend parallèlement à la direction z, à travers le premier foyer ($B_1$; $B_1$, $B_1$').

8. Dispositif de mesure térahertz suivant une des revendications 1 à 7, **caractérisé en ce que** le support d'objet d'essai (5) est conformé de sorte que l'objet d'essai (2) puisse être pivoté autour d'un axe de rotation ($Z_2$ ; $Z_2$, $Z_2$') qui s'étend à travers le second foyer ($B_2$; $B_2$, $B_2$'),

9. Dispositif de mesure térahertz suivant une des revendications 1 à 8, **caractérisé en ce que** le premier miroir respectif (7; 7, 7') est courbé le long d'une ellipse, l'ellipse étant définie par un premier demi-axe (A) d'une longueur a et un second demi-axe (B) d'une longueur b plus courte en comparaison au premier demi-axe (A), pour un rapport des longueurs étant valable : $a/b \leq 1,3$, notamment $a/b \leq 1,2$ et, en particulier $a/b \leq 1,1$.

10. Dispositif de mesure térahertz suivant une des revendications 1 à 9, **caractérisé en ce que** le premier miroir respectif (7; 7, 7') présente une courbure concave dans la direction z, la courbure étant sélectionnée notamment parmi le groupe parabolique, elliptique et sphérique.

11. Dispositif de mesure térahertz suivant une des revendications 1 à 9, **caractérisé en ce que** le premier miroir respectif (7; 7, 7') est réalisé plan dans la direction z et au moins un élément de focalisation (18) est prévu pour focaliser le rayonnement térahertz (S) dans la direction z.

**12.** Procédé pour mesurer des objets d'essai, notamment des objets d'essai en matière artificielle, et déterminer une épaisseur de paroi (dw) ou une épaisseur de couche des objets d'essai (2), le procédé comprenant les étapes suivantes :

- la mise à disposition un dispositif de mesure térahertz (1) suivant au moins une des revendications 1 à 11,
- la disposition d'un objet d'essai (2) de sorte que l'axe central longitudinal (L) de celui-ci s'étende à travers le second foyer ($B_2$; $B_2$, $B_2$'),
- l'émission d'un rayonnement térahertz (S) dans la plage de 0,01 THz à 50 THz au moyen de l'émetteur (9),
- la déviation du rayonnement térahertz (S) émis au moyen du second miroir (8; 8, 8') et du premier miroir (7; 7, 7') dans la direction du second foyer ($B_2$; $B_2$, $B_2$'),
- la réflexion du rayonnement térahertz (S) par l'objet d'essai (2),
- la déviation du rayonnement térahertz réfléchi (R) au moyen du premier miroir (7; 7, 7') et du second miroir (8; 8, 8') dans la direction de l'émetteur (10),
- la détection du rayonnement térahertz réfléchi (R) au moyen de l'émetteur (10).
- l'évaluation du rayonnement (R) détecté, et
- la détermination d'une épaisseur de paroi (dw) ou d'une épaisseur de couche à partir du rayonnement térahertz réfléchi (R) détecté.

**13.** Procédé suivant la revendication 12, **caractérisé en ce que** l'objet d'essai (2) et le second miroir (8; 8, 8') sont pivotés relativement l'un par rapport à l'autre, en particulier le second miroir (8; 8, 8') autour de l'axe z ($Z_1$; $Z_1$, $Z_1$') qui s'étend parallèlement à la direction z, à travers le premier foyer ($B_1$; $B_1$, $B_1$').

**14.** Procédé suivant la revendication 12 ou 13, **caractérisé en ce que** l'objet d'essai (2) présente au moins par tronçons au moins une couche de matériau ($K_1$, $K_2$) en forme de cylindre creux, la couche de matériau ($K_1$, $K_2$) étant réalisée en particulier en une matière artificielle.

**15.** Procédé suivant la revendication 14, **caractérisé en ce que** la mesure et la détermination d'une épaisseur de paroi (dw) ou d'une épaisseur de couche d'au moins une couche de matériau en forme de cylindre creux sont effectuées sur l'ensemble de la périphérie de l'objet d'essai (2).

Fig. 1

EP 3 071 927 B1

Fig. 2

EP 3 071 927 B1

Fig. 3

EP 3 071 927 B1

Fig. 4

EP 3 071 927 B1

Fig. 5

EP 3 071 927 B1

Fig. 6

Fig. 7

Fig. 8

EP 3 071 927 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008046988 A1
- DE 19914696 A1
- US 20060285112 A1
- US 6201601 B1
- US 20090225313 A1